# EUROPEAN PATENT APPLICATION

(11) **EP 1 699 006 A1**
(43) Date of publication of application: **06.09.2006**
(21) Application number: 05425120.2
(22) Date of filing: 04.03.2005
(51) Int. Cl.: G06Q 10/00

(54) **A monitoring system for the distribution of articles**

(71) Applicant: B & P Informatica S.r.l., 20092 Cinisello Balsamo (IT)
(72) Inventor: Giapponese, Marco, 20050, Macherio (IT)
(74) Representative: Siniscalco, Fabio

(57) **Abstract**

A monitoring system (100) for the distribution of articles to a plurality of collection apparatuses (1) that are arranged in corresponding distribution sites in a reference place is described. This system comprises first support means (6;CDP) that can be placed at each collection apparatus (1), in order to support an identification code for the respective apparatus (NF, NP) and a first datum (PR) indicating the presence of the respective apparatus in said place. The system (100) further comprises a reading device (3) that can be associated with an operator of the system, which is provided with a memory (MF) and intended to cooperate with the first support means (CDP) to read the identification code (NF, NP) and the first datum (PR) of a respective collection apparatus (1) and store them in the memory (MF). This reading device (3) is further arranged to prevent that said identification code (NF, NP) and first datum (PR) may be entered in the memory (MF) if not in cooperation with the first support means (CDP).

## Description

The present invention relates to the monitoring systems for the distribution of articles, and particularly though not being limited thereto, the free-press release service.

Typically, the free-press release service is intended for periodicals and specialized journals, i.e. newspapers preferably dealing with only one market field, such as real estate or car markets.

The companies making use of this service purchase a space in the journal dedicated to the market of interest, and all the advertisements desired to be published, such as information concerning cars on sale by a car dealer or properties for sale/rent that are available from a real estate are paged within this space.

After they have been printed, the journals are delivered to the suitable distribution sites being normally provided with collecting apparatuses for the same, such as metal boxes. When the copies of a newspaper current issue are delivered, the copies of the previous issue are simultaneously collected. The collection boxes for the journals have one or more drawers, each corresponding to a different newspaper.

There are different types of distribution sites: the newsstands and tobacco-shops; the real estates (in the property field); the so-called neutral sites (stores, food shops).

The journal distribution is very important in evaluating the efficacy of a journal by calculating the delivered and collected copies per each box, thereby obtaining a very reliable public interest assessment. The operators in charge of the delivery and simultaneous collection control a urban area that is divided, in turn, into several assigned areas. For example, each of these areas can comprise a number of boxes amounting to about four hundred. During each work shift, an operator drives his van following a route to get to all the boxes in his assigned area.

At present, a satisfying monitoring of the journal distribution is not provided. Particularly, one cannot prove for certain whether all the collecting boxes arranged in the route have been actually reached by the distribution operator assigned thereto. The distribution manager is verbally informed, directly by each operator, on how many boxes have been reached, how many current copies have been distributed and how many old copies have been collected per each newspaper. In some cases, the operator's wage directly depends on the number of boxes attended. The operator usually hands back the returned copies of the previous issue and should return the current copies that he has not been able to deliver, although the latter case hardly ever occurs. Normally, the operator is not required to report about the unavailability of the boxes.

An empirical form of distribution monitoring may be the customers complaining that the number of contacts they have received in response to the published advertisements has decreased compared with a previous period. This may mean that the journals in the corresponding box are finished or are still those of the previous issue, or even they have not been delivered because the box was unavailable. This leads to the conclusion that the expected supply has not been carried out, which is very likely due to the operator's negligence.

In order to solve this problem, supervisors have also been enlisted, who are however a considerable additional cost, and in any case they may not be a reliable source for the assessment of the actual quality level of the distribution service.

The object of the present invention is to provide a monitoring system for the distribution of articles (such as the so-called free-press release) that allows to solve the drawbacks mentioned above by improving the quality of the distribution service.

This object is achieved by the monitoring system such as defined and characterized in claim 1. Preferred embodiments of the monitoring system are as defined in the dependent claims 2-27. An object of the present invention is also a reading device such as defined in claim 28.

The invention will be better understood from the following detailed description of an embodiment thereof, which is given by way of example with reference to the annexed figures, in which:
Figure 1 is a schematic diagram of a monitoring system for free-press release distribution according to the invention employing a collection box and a data reading device;
Figure 2 is a schematic diagram of the structure of several data that can be read by means of said device;
Figure 3 is a flow-chart illustrating a possible data acquisition procedure that can be implemented with the system according to the invention, and
Figure 4 illustrates a possible procedure for processing the data acquired by means of the procedure from Figure 3.

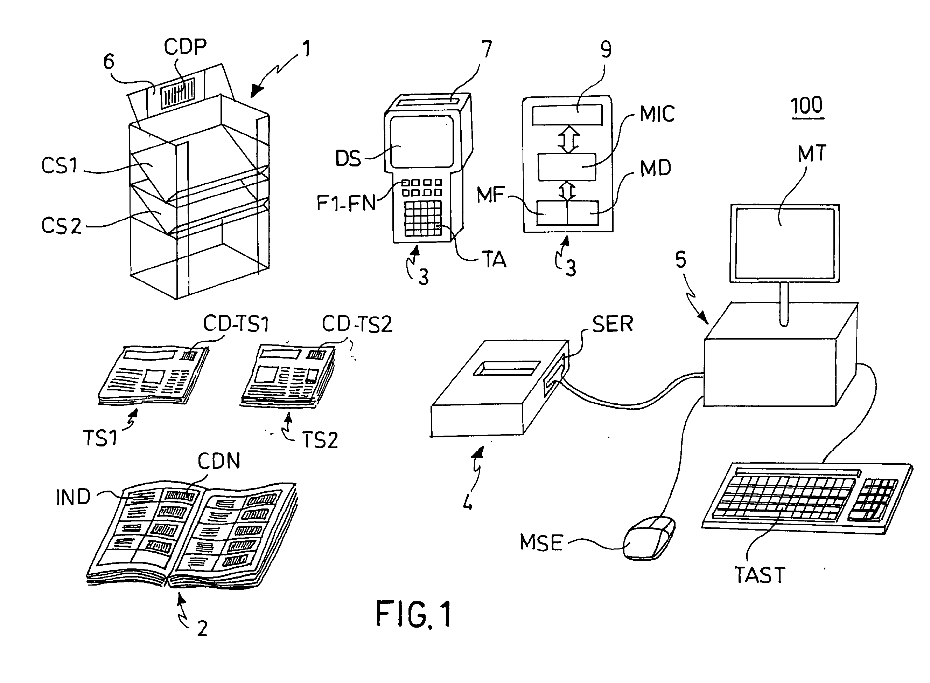

With reference to Figure 1, there is shown a monitoring system 100 comprising a plurality of collection apparatuses 1 (only one of them being shown in the Figure) for articles TS1 and TS2, a handbook 2, a reading device 3, a housing 4 that can be associated with said reading device and a data processing apparatus 5.

This monitoring system can be used, for example, for the distribution of journals, magazines and the like, such as the above-mentioned free-press release. As already stated above, the free-press release service is intended for periodicals and specialized journals, i.e. newspapers that preferably deal with only one market field, such as real estate or car markets.

The collection apparatus 1 is normally arranged in one of the distribution sites participating in the service, such as: the newsstands and tobacco-shops; the real estates (in the property field); the so-called neutral sites (stores, food shops).

The reading device 3 is given to an operator charged of the distribution of articles (such as journals, according to the example), who is required to use the same when delivering and collecting the articles to/from all the distribution sites being in his assigned area of responsibility. The housing 4 and the data processing apparatus 5 are placed at a central distribution office, where the operator goes when he has finished to deliver the journals.

From a logistic point of view, an operator is responsible for serving (i.e. delivering and collecting journals) a reference place (such as a city or a city area) where there are several distribution sites being provided with at least one respective box. For example, a reference place can be provided with four hundred boxes.

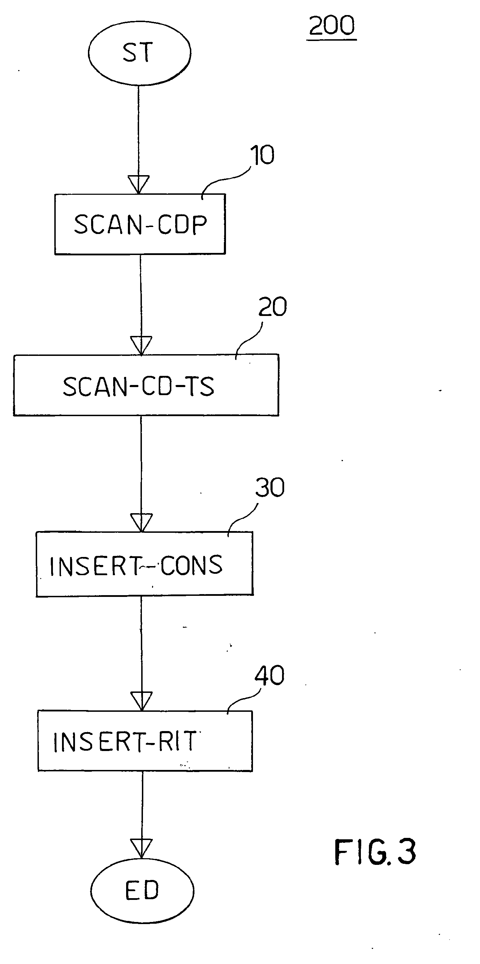

The collection apparatus 1, which is embodied by a metal box in the example (known per se) has a metal plate 6 on a front side thereof (Fig. 1) on which there is displayed a first information support means, such as preferably a first barcode CDP (see also Fig. 3) called the "positive" barcode in the following. The positive barcode CDP is, particularly, printed on an adhesive label (by techniques known to those skilled in the art) which is applied to the plate 6 or, alternatively, it can be directly engraved on the plate metal by means of moulding or on a structural element of the box.

The box 1 can comprise one or more compartments (for example, two compartments) CS1 and CS2 housing at least one first journal TS1 of a first newspaper and at least a second journal TS2 of a second newspaper, respectively.

The handbook 2 is preferably a book-like support which is handed over to each distribution operator of the system 100. This handbook 2 contains information on at least all the boxes pertaining to the respective operator. In greater detail, the handbook includes, per each box 1, full address details (such as, street or square and street number) corresponding to the location of a particular box in the served area. In Fig. 1, for clarity purposes, this address has been indicated with IND.

Furthermore, other information is associated with each address IND on the handbook 2, such as information in the form of a barcode CDN, called the "negative" barcode in the following. Advantageously, the handbook is updated and printed each time a new box is added to the distribution network.

A barcode is known to comprise a series of typically rectangular, clear and dark regions, which codify corresponding information. Typically, the width of the dark regions, i.e. the so-called bars, and/or the width of the clear spaces between two bars indicate the information being coded.

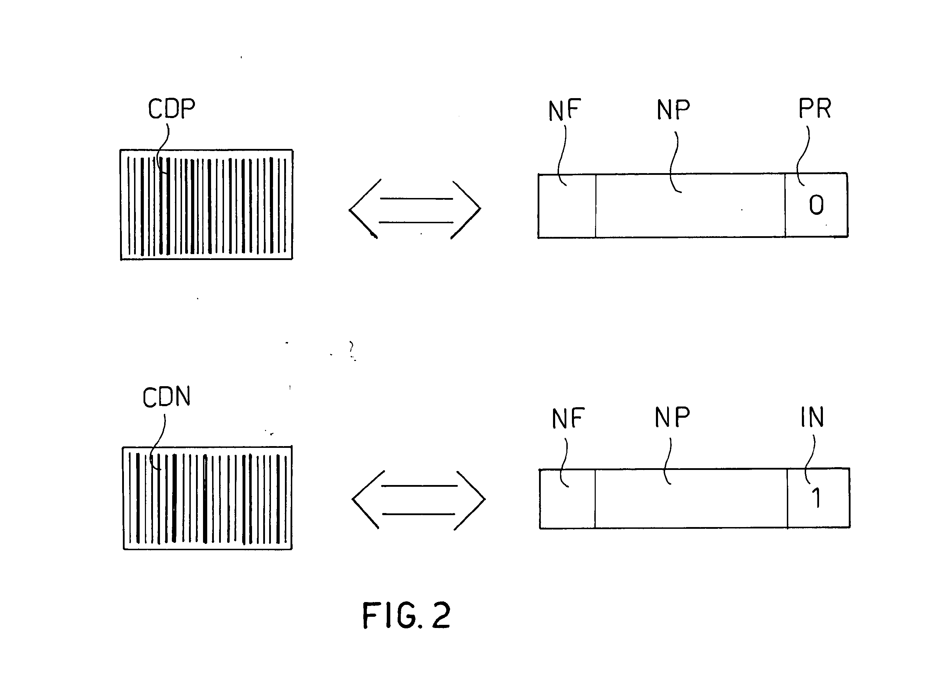

In the case described above, the positive barcode CDP is the coding of information schematically illustrated in Fig. 2 by means of a character string, comprising the following data:
- a place-datum NF including, for example, two characters indicating the reference place where the box 1 is located;
- a box-datum NP including a set of characters indicating the sequence number of that particular box 1 in the same reference place,
- a presence-datum PR including, for example, a bit (particularly the "0" bit) indicating that the box is in that particular distribution site and, accordingly, in the reference place.

It should be noted that the place-datum NF and the box-datum NP allow to univocally identify the corresponding box 1, and accordingly they are an example of identification code for the box.

The negative barcode CDN is the coding of information schematically illustrated in Fig. 2 by means of a character string, comprising the following data:
- the place-datum NF and the box-datum NP are the same as described for the positive barcode CDP;
- an unavailability-datum IN including for example a bit (particularly the bit "1") indicating that the box 1 is unavailable in a particular distribution site (and, accordingly, in the reference place) or that the positive barcode CDP is not available for reading (for example, because the code has been damaged).

The journals TS1 and TS2 deposited in the box 1 are univocally provided with relative identification information CD-TS1, CD-TS2, for example, concerning the newspaper, edition and issue of the current year, to which the journals belong. Preferably, this information CD-TS1, CD-TS2 consists of barcodes arranged on the first page of each copy.

In the example described above, the reading device 3 is a portable pocket computer such as particularly the CK1 pocket computer manufactured and sold by Intermec S.r.l., Milan. On the front side, the pocket computer 3 has a display DS, an ergonomic alphanumerical keyboard TA and function keys F1-FN.

With reference to Fig. 1, the pocket computer 3 comprises therein: an optical scanner 9 to acquire the barcoded information, such as a laser scanner or integrated linear imaging device; a volatile memory MD, for example a SDRAM memory; a non-volatile memory MF, for example a FLASH memory; programmable processing means, such as a microprocessor MIC, for example a 16 Mb ARM 7 processor. It has a slot aperture 7 on the top for emitting a light beam generated by the optical scanner 9 employed to scan the barcodes.

Advantageously, the pocket computer 3 is programmable and combines, for example, a Linux®-based operating system with Microsoft® C/C++ programming tools.

In the case described above, the processing means MIC can be programmed by means of a dedicated software and such that the distributor can carry out the data acquisition procedure that will be described below, by means of the pocket computer 3.

Particularly, the pocket computer 3 can cooperate, through optical scan, with the positive barcode CDP and store a string corresponding to the place-datum NF, box-datum NP and presence-datum PR in the non-volatile memory MF.

Particularly, the pocket computer 3 can also cooperate with the negative barcode CDN to store a string corresponding to the place-datum NF, box-datum NP and unavailability-datum IN in the non-volatile memory MF. Advantageously, the pocket computer 3 can cooperate with the barcodes CD-TS1 and CD-TS2 relative to the identification codes of journals TS1, TS2.

It should be observed that the pocket computer 3 is arranged to prevent that at least the box-datum (particularly, also the place-datum) may be entered in the non-volatile memory MF and in the volatile memory MD in case of non cooperation with the positive barcode CDP. Therefore, the distribution operator cannot store the barcode identifying a box (consisting of the data NF and NP) in the pocket computer 3 together with storing the presence-datum PR.

Furthermore, the pocket computer 3 is arranged to prevent that the unavailability-datum IN is also entered in said memories MF and MD if not in cooperation with the handbook 2.

Particularly, the programmable microprocessor MIC can be programmed such as to deactivate at least one portion of the alphanumerical keyboard TA to prevent that the box-datum NP (and, for example also the place-datum NF), presence-datum PR and unavailability-datum IN are entered through the keyboard. Furthermore, entering the identification data of the journals TS1 and TS2 when they are not read in cooperation with the barcodes CD-TS1 e CD-TS2 can also be prevented.

Preferably, the pocket computer 3 can be further programmed such that a first numerical value N_{del} corresponding to the amount of each journal TS1, TS2 being arranged in the box 1 by the operator and a second numerical value N_{coll} corresponding to the amount of each journal being collected from the box 1 can be manually entered in the non-volatile memory MF by means of the alphanumerical keyboard TA.

The pocket computer 3 is programmed such that at least one portion of the alphanumerical keyboard TA can be enabled to enter the first and second numerical values only after the reading of the positive barcode CDP or negative barcode CDN and the codes CD-TS1 or CD-TS2 identifying the newspaper has been completed.

The pocket computer 3 is further programmed such that the information corresponding to the date D and time H of the positive barcode CDP or negative barcode CDN readings are automatically entered in the non-volatile memory MF.

It should be observed that the information coded by the positive barcode CDP and negative barcode CDN can also be stored by information support means other than barcode. For example, a memory chip, magnetic tapes or transponders may also be used. As regards the journals TS1 and TS2, the newspaper identification code is preferably stored by means of a barcode, though it may be also provided by means of another type of information support means.

When information support means other than barcode are used, the pocket computer 3 is provided with a suitable reading unit for the information stored.

The housing 4 associated with the pocket computer 3 is also called in jargon the communication and recharge cradle and can be used to charge the batteries provided for the pocket computer 3, and load/download the data stored in memory MF. To the purpose, this housing comprises data transfer means, a serial port SER in the case described (for example of the RS-232 type) for connecting the reading device 3 that can be coupled with the housing 4 with the processing apparatus 5. Connectivity is controlled by a transmission protocol, such as TCP/IP protocol (Transmission Control Protocol/Internet Protocol).

The serial port SER can be used to transfer the data stored by the memory MF of pocket computer 3 to the processing apparatus 5. Furthermore, the serial port SER can be used either to load the management program for the data acquisition procedure that will be described below in the pocket computer memory, or to cancel the data stored by means of the latter procedure from the memory of pocket computer 3. These operations can be carried out only by appointed authorized staff that can change, update or cancel (where provided) the data stored in the pocket computer memory MF by using for example a private access key or password. Since the distribution operator is not included in the authorized staff, he cannot have access to the memories MD and MF of pocket computer 3, whether voluntarily or not.

The processing apparatus 5 is, for example, a personal computer comprising a processing unit UN, an alphanumerical keyboard TAST, a mouse MSE and a monitor MT. The processing unit comprises, in turn, a processor and a memory unit. The processing unit can be programmed such as to receive those data that can be transferred from a data acquisition device, and store them in the memory of computer 5 for subsequent processing, for example when publishing an on-line archive.

The data acquisition procedure carried out by the operator using the pocket computer 3 when he delivers and collects the journals in the reference place assigned thereto will be now described. This procedure provides acquiring the information concerning the data corresponding to the positive CDP or negative CDN barcodes, the identification barcode of the newspaper CD-TS1 or CD-TS2, the amount N_{del} of copies deposited in the box and the amount N_{coll} of copies collected therefrom.

When using the pocket computer 3, the operator follows the instructions relative to each operation to be performed and which are displayed on the display DS of the pocket computer 3 in the form of a corresponding menu.

The operator first reaches the box 1 which can be for example the first box of the reference place being assigned thereto. An option (that can be enabled by means of a key F1) provided in the menu of the pocket computer 3 starts out the procedure relative to a new box. The diagram from Fig. 3 begins with a symbolic starting step ST.

The procedure of when the box 1 is properly placed and does not show any damage requiring the same to be replaced is described with reference to Fig. 3. When the box is available and undamaged, the operator performs an optical reading of the positive barcode CDP placed on the metal plate 6 (step SCAN-CDP, 10). Then, the operator performs an optical reading of the newspaper barcode CD-TS1 of the journal TS1 that is placed on the first page thereof (step SCAN-CD-TS, 20).

The data associated with the positive barcode CDP and the first newspaper code CD-TS1 are stored in the non-volatile memory MF, thereby creating a string comprising the corresponding data (place-datum NF, box-datum NP, presence-datum PR) as well as the information concerning the date D and time H of reading.

At this point, after the operator has placed the current copies of the newspaper in the first compartment CS1 and collected the old copies therefrom, he manually enters both the first value N_{del} relative to the amount of copies delivered (step INSERT-CONS, 30) and the second value N_{coll} relative to the amount of old copies collected therefrom (step INSERT-RIT, 40).

The first value N_{del} and the second value N_{coll} are stored in the memory MF and inserted at the end of the created string.

The operator now selects a second option (key F2) from the menu of the pocket computer 3 relative to the acquisition of the data concerning a second newspaper TS2 of box 1. The procedure for this second newspaper is the same as described above. The diagram from Fig. 3 ends with a symbolic ending step ED.

When the box 1 is missing or damaged, the operator does not perform the reading of the positive barcode CDP, but looks up the handbook 2 for the address details IND corresponding to the distribution site of the box 1.

By means of the pocket computer 3, the operator now performs an optical reading of the negative barcode CDN that is provided in the handbook 2 and associated with the address details IND.

Then, the operator performs the optical reading, by means of the pocket computer 3, of the barcode of the first newspaper TS1 he desired to place in the box. The data of the negative barcode CDN and the first newspaper code CD-TS1 are stored in the non-volatile memory MF, thereby creating a corresponding string comprising the data (place-datum NF, box-datum NP, unavailability-datum IN) as well as the information concerning the date D and time H of reading.

In the two subsequent steps, since no copies of the journals can be delivered/collected, the operator manually enters (i.e. by means of the keyboard TA) a first value N_{del} of "0" and a second value N_{coll} of "0" thereby signalling that the box 1 has to be replaced.

It should be noted that the procedure provides that the association of the unavailability-datum IN with values of "0" for the delivered/collected copies indicates a condition of missing or damaged box.

When the barcode of box 1 is unreadable, the operator stores the data of the negative barcode CDN provided on the handbook 2 by means of the pocket computer 3. Then, the operator performs the optical reading, for example, of the barcode CD-TS1 of the first newspaper and delivers the current copies and collects the old copies that are left in the box.

Subsequently, by means of keyboard TA the operator enters a first value N_{del} for the copies he has actually delivered, while as to the collected copies, it may be established that the value "0" is entered regardless of how many old copies have been collected. This procedure can provide that the association of the unavailability-datum IN with the datum concerning the number of collected copies N_{coll} being "0" indicates a condition where the box is available but provided with an unreadable barcode.

The procedure of distribution and data acquisition is ended when the operator has finished the boxes in his area of assignment. When the distribution has been completed, a text file comprising the string of characters relative to each acquisition that has been carried out is stored in the memory MF of pocket computer 3.

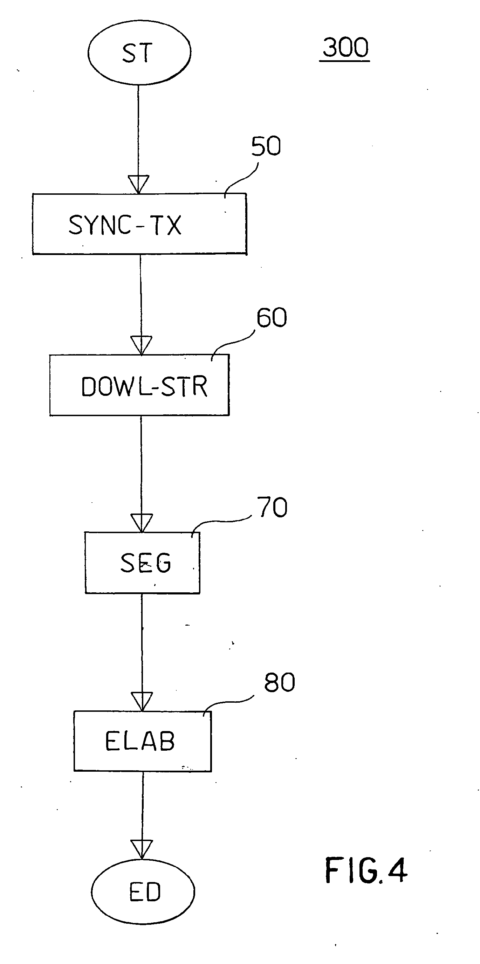

The operator goes to the central distribution office to carry out the data download and processing procedure 300 such as outlined in Fig. 4. The flow chart from Fig. 4 begins with a symbolic starting step ST.

When the pocket computer 3 is inserted in the corresponding housing 4, a second menu appears on the pocket computer display indicating, for example, a third option F3 for data acquisition, a fourth option F4 for data transfer, and a fifth option F5 for cancellation of the transmitted data.

It will be assumed that an operator from the central office in charge of data processing selects the third option F3. Following this selection, a synchronization step (step SYNC-TX, 50) takes place at a transmission protocol level between the apparatus 4 and the apparatus 5 that are intended to communicate with each other.

Subsequently, the string stored in the non-volatile memory MF of the pocket computer 3 begins to be transferred to the memory of the processing apparatus 5 (step DOWL-STR, 60).

After the data transfer has been completed, the central office operator copies the data stored in the memory of the processing apparatus 5 on the web site. During this step and only for that operator of the central office, the write access is provided for the web site.

By means of a processing program loaded from the processing unit 5, the operator divides the string in a plurality of segments (step SEG, 70), each containing the data concerning a respective box , which are subsequently re-processed in order to obtain a making-up of the data on the web site such as to be easily and quickly looked up (step ELAB, 80).

By each of these segments, the central office operator can get detailed information on the route followed by the distribution operator and the condition of each box as well as the amounts of journals that have been delivered and collected. As may be understood from the above description, the operator of the central office can get information per each box about: the reference place; the sequence number of the box; the availability of the box in site; missing or damaged box; box code unreadable; date and time of data acquisition; number of journal copies delivered and collected per each newspaper involved.

After the procedure of data processing 300 has been completed (the flow chart from Fig. 4 ends with a symbolic step ED), all the data previously stored by the above acquisition procedure can be cancelled from the non-volatile memory MF of pocket computer 3 by selecting the fifth option F5, and they can be transferred to the processing apparatus 5. The pocket computer 3 is thus ready to store the data concerning the next acquisition and reading procedure (third option F3 in the menu).

Advantageously, the data concerning the latest distribution can be looked up by means of a software that is provided on-line by the distribution office that can be accessed only by entering a password.

This archive is available for consultation, for example, to the distribution manager and each distribution operator. This software can also make this database available to the customers (such as the advertisers), obviously with the restriction that only some pages, for example of general interest, can be viewed.

By means of the teachings of the present invention a particularly advantageous monitoring system can be obtained.

Since the positive barcode CDP cannot be manually entered by the distribution operator in the pocket computer 3, the operator cannot declare that he has completed the whole delivery/collection route if he has not. Furthermore, the unavailability-datum IN provided in the pocket computer 3 associated with a particular box allows, subsequently to a verify of the box condition, to precisely ascertain whether what has been reported by the operator is true.

Furthermore, if the distribution operator should decide to read and store the negative barcodes CDN directly from the handbook 2 without reaching the boxes, during the next work shift, he would uselessly have to place new boxes in distribution sites where they are not required.

The distribution quality can be improved by the particular monitoring system described above because the number of copies that have been delivered and not picked up by the users can be precisely counted per each single distribution site. The amount of journals to be delivered to the various distribution sites can be thereby optimised. By doing so, the newspaper printing step can also be optimised and there can be obtained the actual number of copies required to be delivered.

It should also be noted that the procedures carried out according to the preferred example such as described above with reference to Fig. 3 and 4 are mostly automatic, whereby they are very quick and feasible both for the distribution operators and the central office operators who transfer the data to the processing apparatus 5.

It is understood that a number of variant embodiments can be provided and implemented in order to improve the reliability of the monitoring system and the quality of the press service as well.

## Claims

1. A monitoring system (100) for the distribution of articles to a plurality of collection apparatuses (1) that are arranged in corresponding distribution sites in a reference place, **characterized in that** it comprises:
- first support means (6;CDP) that can be placed at each collection apparatus (1) in order to support an identification code for the respective apparatus (NF, NP) and a first datum (PR) indicating the presence of the respective apparatus in said place,
- a reading device (3) that can be associated with an operator of the system, which is provided with a memory (MF) and intended to cooperate with the first support means (CDP) to read the identification code (NF, NP) and the first datum (PR) of a respective collection apparatus (1) and store them in the memory (MF); the reading device being further arranged to prevent that said identification code (NF, NP) and the first datum (PR) may be entered in the memory (MF) if not in cooperation with said first means (CDP).

2. The monitoring system (100) according to claim 1, wherein each collection apparatus (1) is further associated with respective second support means (2; CDN) of a second identification code for the apparatus (NF; NP) and a second datum (IN) indicating that the collection apparatus (1) and/or said first support means (CDP) are unavailable.

3. The monitoring system (100) according to claim 2, the second support means (CDN) relative to each collection apparatus being arranged on a common support means (2) that can be associated with a system operator.

4. The monitoring system (100) according to claim 3, wherein in the common support means (2) each of said second support means (CDN) is associated with a respective identification datum (IND) of the distribution site where the collection apparatus (1) is arranged.

5. The monitoring system (100) according to claim 4, wherein the reading device (3) is further arranged in order to prevent that said identification code (NF, NP) and second datum (IN) are entered in the memory (MF) if not in cooperation with said second means (CDN).

6. The monitoring system (100) according to claim 1, wherein each of the articles is associated with respective third support means (CD-TS1; CD-TS2) of an identification code for the article (TS1; TS2).

7. The monitoring system (100) according to claim 6, wherein the reading device (3) is further intended to cooperate with said third support means (CD-TS1; CD-TS2) in order to read the identification code for the article (TS1; TS2) and store it in the memory (MF).

8. The monitoring system (100) according to claim 7, wherein the reading device (3) is further arranged in order to prevent that the identification code for the article (TS1; TS2) is entered in the memory (MF) if not in cooperation with said third support means (CD-TS1; CD-TS2).

9. The monitoring system (100) according to claim 1, wherein the reading device (3) is further provided with an alphanumerical keyboard (TA) for entering data in said memory (MF).

10. The monitoring system (100) according to claim 9, wherein a first numerical value corresponding to the amount of each article (TS1, TS2) being deposited by the operator in the collection apparatus (1) and a second numerical value corresponding to the amount of each article (TS1, TS2) being collected from the collection apparatus can be manually entered in the memory (MF) by means of the alphanumerical keyboard (TA).

11. The monitoring system (100) according to claim 2, wherein the reading device (3) is further arranged such that information concerning the date and time of reading of one of the first support means (CDP) and second support means (CDN) can be automatically entered in the memory (MF).

12. The monitoring system (100) according to claim 9, wherein the reading device (3) further comprises programmable processing means (MIC) such that at least one portion of the alphanumerical keyboard (TA) can be disabled in order to prevent that said identification code (NF, NP) for said first datum (PR) and said second datum (IN) are entered by means of the keyboard.

13. The monitoring system (100) according to claim 10, wherein at least one portion of the alphanumerical keyboard (TA) can be enabled through the programmable processing means (MIC) so that said first and second numerical values can be inserted, said enabling can take place only after a reading operation associated with the cooperation with at least one of the first (CDP), second (CDN) and third (CD-TS1, CD-TS2) support means has been completed.

14. The monitoring system (100) according to any preceding claim, wherein the reading device (3) comprises optical scanning means (9) in order to cooperate with the first (CDP) and second (CDN) support means.

15. The monitoring system (100) according to claim 14, wherein said optical scanning means comprise at least one of the devices belonging to the group: laser scanner, image acquisition device.

16. The monitoring system (100) according to any preceding claim, wherein the first (CDP) and second (CDN) support means are barcodes indicating said identification code, first datum and second datum, respectively.

17. The monitoring system (100) according to any preceding claim, wherein the collection apparatus (1) comprises at least one compartment (CS1, CS2) for placing the articles (TS1, TS2).

18. The monitoring system (100) according to claim 17, wherein the articles (TS1, TS2) are journals, magazines and the like belonging to specialized newspapers.

19. The monitoring system (100) according to any preceding claim, wherein the reading device (3) can be coupled to a corresponding housing (4); the housing (4) comprising communication means (SER) for transferring the data stored in the memory (MF) to a data processing apparatus (5), said housing (4) and said data processing apparatus (5) being located in a central monitoring office.

20. The monitoring system (100) according to claim 19, wherein the communication means (SER) of the housing (4) further allow to cancel the data stored in the memory (MF) of the reading device (3) after the data transfer from the memory (MF) to the processing apparatus (5) has been completed.

21. The monitoring system (100) according to claim 20, wherein a software for the programming of the processing means (MIC) can be loaded in the memory (MF) of the reading device (3) by means of the communication means (SER) of the housing (4).

22. The monitoring system (100) according to one of claims 19 to 21, wherein the use of the communication means (SER) is allowed only to authorized staff by means of a first access password.

23. The monitoring system (100) according to claim 22, wherein an on-line database for consulting the data transferred from the memory (MF) can be developed by the processing apparatus (5).

24. The monitoring system (100) according to claim 23, wherein the authorized staff can access the database by means of a second access password.

25. The monitoring system (100) according to any preceding claim, wherein the reading device (3) is a pocket computer.

26. The monitoring system (100) according to at least one of the preceding claims, wherein the programmable processing means (MIC) comprise a microprocessor.

27. The monitoring system (100) according to at least one of the preceding claims, wherein the common support means (2) comprise a paper handbook.

28. A reading device (3) comprising a memory (MF) to store data and programmable processing means (MIC), **characterized in that** said device is programmed to operate in the monitoring system (100) for the distribution of articles according to at least one of the preceding claims.
